# FASCICULE DE BREVET EUROPEEN

(11) **EP 3 055 236 B1**
(45) Date de publication et mention de la délivrance du brevet: **29.11.2017**
(21) Numéro de dépôt: 14783794.2
(22) Date de dépôt: 06.10.2014
(51) Int. Cl.: B65G 47/31, B65G 47/53, B65G 47/96, B65G 43/08

(54) **PROCÉDÉ ET DISPOSITIF POUR LE TRIAGE DES BAGAGES, CAPABLE DE TRAITER DES PRODUITS PEU STABLES ET DE FORMES IRRÉGULIÈRES**
GEPÄCKSORTIERVERFAHREN UND -VORRICHTUNG ZUR HANDHABUNG INSTABILER ODER UNREGELMÄSSIG GEFORMTER MATERIALIEN
BAGGAGE SORTING METHOD AND DEVICE, SAID DEVICE BEING CAPABLE OF HANDLING UNSTABLE OR IRREGULARLY SHAPED MATERIALS

(30) Priorité: 08.10.2013 FR 1359743
(43) Date de publication de la demande: 17.08.2016
(73) Titulaire: Fives Intralogistics S.p.A., 21015 Lonate Pozzolo (VA) (IT)
(72) Inventeur: CHIEREGO, Lorenzo, I-21100 Varese (IT); RUSCONI, Pierangelo, I-20020 Villa Cortese (IT); SOLDAVINI, Attilio, Deceased (IT)
(74) Mandataire: Casadei, Giovanni
(86) Numéro de dépôt international: PCT/EP2014/071364
(87) Numéro de publication internationale: WO 2015/052144

(56) Documents cités:
- EP-A2- 0 700 844
- WO-A1-00/32502
- WO-A2-01/24947
- JP-A- 2009 179 438

## Description

L'invention se rapporte aux équipements destinés au tri d'articles par l'intermédiaire d'une machine de tri selon le préambule de la revendication 1 équipée d'unités de transport à bande croisée appelées « cross-belt ».

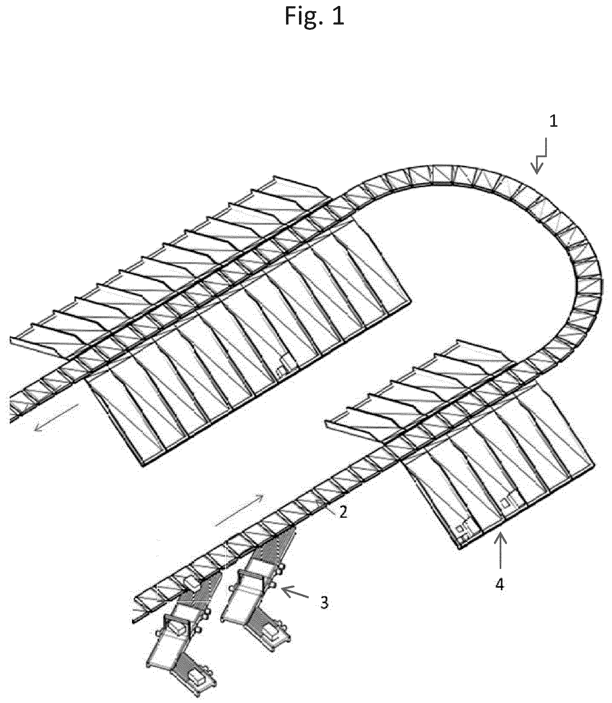

La machine de tri 1 est représentée sous la forme générale de la figure 1 : elle est constituée par un train de chariots qui couvre une trajectoire fermée le long de laquelle il y a des stations automatiques d'entrée 3, qui doivent charger les articles individuels pour être triés sur des chariots de la machine de tri, et les stations de sortie 4 des articles triés , qui sont généralement constitués de convoyeurs d'accumulation ou de goulottes où s'accumulent tous les articles triés selon des critères d'appartenance à une même destination géographique ou au trajet des moyens de transport, comme dans les applications postales, le courrier et les bagages à l'aéroport, ou d'appartenir à la même commande du client, dans les applications logistiques de distribution.

La machine de tri cross belt est caractérisée par l'unité de tri sur le chariot qui est constituée par un convoyeur à bande ou unité de transport 2, équipé d'un moteur électrique et sa commande qui peut être activée dans les deux sens des lignes perpendiculaires à la direction de déplacement du tri.

La bande de l'unité de transport 5 est alors activée, pendant le chargement d'articles à bord, pour transférer des articles sans décélération significative et pendant le déchargement, pour traiter des points de destination.

La machine de tri « cross belt » est déjà la référence dans les domaines postaux, courrier et de distribution pour sa grande capacité, sa précision, sa fiabilité dans le traitement d'un large éventail d'articles : colis, paquets, enveloppes, sacs, flyers, flats.

L'utilisation d'une bande transporteuse à forte adhérence, sur les chariots de la machine de tri, pour le chargement et le tri d'articles, donne la méthode la plus simple et sûre, même pour des articles plus difficiles à traiter, car exploite le support sur la surface plate formée par la bande pour le triage en activant la bande avec une accélération bien inférieure à la limite de glissement du paquet sur la bande. Ce qui donne au paquet une trajectoire de tri précise, reproductible et indépendante des caractéristiques de l'objet.

La machine de tri « cross belt » est particulièrement adaptée même au traitement des bagages, qui se caractérise par une grande variété de formes et de matériau : il y a des bagages en matière plastique rigide, du cuir, revêtu d'un film de protection, sacs souples, avec des sangles, des poignées, des roues.

Avec cette méthode, vous pouvez facilement traiter des articles qui donneraient des problèmes avec d'autres systèmes : les bagages avec des lacets ou des sangles ou des pièces métalliques pourraient créer des problèmes avec un système de tri à poussoirs, des bagages avec film de protection pourraient présenter des problèmes de glissement par exemple dans les applications avec un système de tri à plateaux basculants (« tilt tray »).

Le système « cross belt » n'a pas d'autres pièces en mouvement sur la bande de l'unité de transport, en particulier, ni d'éléments qui, comme les plateaux basculants, peuvent créer des ouvertures dangereuses où les bagages peuvent être piégés ou des parties ce qui peut provoquer des interférences mécaniques importantes avec des parties fixes le long du trajet de la machine.

Mais afin de profiter pleinement des caractéristiques favorables du système « cross belt » pour trier des bagages, il est nécessaire de trouver une solution à un aspect contradictoire : d'une part le système « cross-belt » est particulièrement adapté aux bagages difficiles, principalement parce que le secteur du transport et de tri est constitué simplement par la surface plane de l'unité de transport, capable d'accélérer chaque type de bagages, de l'autre côté la surface plane de transport n'est pas le plus adapté pour les bagages peu stables qui peuvent rouler sur une surface plane lorsqu'ils sont soumis à des accélérations.

Il est connu dans l'art antérieur des systèmes permettant de gérer des colis volumineux sur des systèmes cross-belt. WO0124947 divulgue un dispositif de tri d'articles selon le préambule de la revendication 1 et décrit la dépose du colis volumineux sur deux unités successives pourvue d'une plaque support entre deux unités adjacentes. Cependant cette solution n'est pas suffisante pour traiter les colis instables lors des phases d'accélérations dans les systèmes cross-belt.

Lors des changements de direction le long du trajet de la machine, le bagage est soumis à une réaction d'inertie qui se produit avec une accélération centrifuge par rapport au système de transport, de sorte que le bagage instable peut rouler sur le côté de la machine de tri : les conséquences peuvent être que les bagages ratent le départ du vol mais aussi cela peut entrainer de graves dommages pour les bagages et pour la machine.

Aujourd'hui, les trieurs « cross belt » et « tilt tray », ce dernier largement utilisé dans les applications de l'aéroport, peuvent fonctionner à une vitesse jusqu'à 3 m/s, dans de nombreux cas c'est la solution la plus simple au problème de connexion entre les zones d'entrée des bagages et les zones de stockage pour la préparation aux vols et l'application nécessite souvent de longues distances et des temps de passage réduits. Toutefois, la nécessité d'avoir une grande vitesse et des circuits de formes souvent complexes, avec beaucoup de courbes pour s'adapter à l'espace disponible, constituent les conditions dans lesquelles les bagages instables peuvent causer des problèmes.

Les conteneurs plastiques sont souvent utilisés pour traiter les bagages instables, mais l'utilisation de conteneurs entraîne des complications et de la manutention supplémentaire pour la réalisation de circuits de retour et pour la distribution des conteneurs vides dans les points d'entrée, et donc le grand intérêt est de limiter leur utilisation.

L'invention vise à améliorer la capacité du système « cross belt » dans le traitement des articles et en particulier des articles instables.

L'invention consiste notamment en un dispositif de tri d'articles selon la revendication 1, incluant des articles instables, comprenant au moins une station de chargement automatique d'articles permettant de transférer les articles vers une ou plusieurs unités de transport, la station étant équipé d'au moins un moyen de transport des articles et d'un système apte à déterminer la position, la forme et la taille des articles, un ensemble d'unités de transport à bande croisée, chaque unité étant pourvue d'une plaque support entre deux unités adjacentes, au moins une section de sortie des articles triés, dont le système permet de détecter un éventuel changement de position d'un article sur un moyen de transport lors de la phase d'accélération du moyen de transport pour transférer l'article sur une ou plusieurs unités, permettant le maintien en position de l'article sur son/ses unités de transport pendant son déplacement sur la trieuse. Des plaques support assurent en permanence une continuité de surface d'appui entre deux unités sur une largeur sensiblement égale à la surface d'appui des bandes.

Selon un premier exemple de réalisation de l'invention, les unités de transport comprennent des rouleaux de transport de la bande dont la zone de contact est plus courte que la largeur de bande.

Dans ce cas des pièces incurvéees permettent de maintenir la partie de la bande non supportée par les rouleaux. Ces pièces possèdent une fente inclinée par rapport au plan défini par la surface d'appui des articles sur l'unité de transport permettant d'accueillir les plaques support.

Les unités de transport comprennent des moyens de réglage de l'inclinaison des rouleaux permettant un éloignement symétrique des extrémités des rouleaux.

Selon un second mode de réalisation de l'invention, les bandes de transport du dispositif de tri d'articles comprennent également des profils verticaux assurant le maintien des articles sur les unités de transport pendant leurs déplacements sur la trieuse, notamment lors des virages conduisant à une forte vitesse d'accélération des articles.

Dans ce cas, des équipements de contrôle et de commande détectent la position des profils verticaux et positionnent les bandes avant la station de chargement et pendant le chargement des articles afin de placer les articles entre des profils verticaux lorsqu'ils se trouvent sur l'unité de transport.

Dans ce mode de réalisation de l'invention, des équipements de contrôle et de commande permettent de détecter un mouvement des profils verticaux d'une bande lorsqu'un article est transporté et d'agir sur le moteur de la bande pour positionner les profils verticaux dans leur position optimale de transport.

L'invention concerne également un procédé de tri d'articles selon la revendication 10, incluant des articles instables, au moyen d'une trieuse composée d'unités de transport à bande croisée, chaque unité étant pourvue d'une plaque de support permettant une continuité de surface d'appui entre deux unités adjacentes, d'au moins une station de chargement automatique d'articles équipé d'un moyen de transport des articles et d'un système apte à déterminer la forme et la taille des articles, caractérisé en ce qu'on détecte un éventuel changement de position d'un article sur le moyen de transport lors de la phase d'accélération du moyen de transport pour transférer l'article sur une ou plusieurs unités de transport. Si le changement de position de l'article est trop important pour permettre sa prise en charge automatique par les unités, la station de chargement l'évacue vers une zone de traitement manuel. Si le changement de position de l'article est faible, la station de chargement corrige dynamiquement la position de l'article sur le moyen de transport pour retrouver une position compatible avec le transfert sur les unités. Si le changement est important, la station de chargement renvoie l'article en amont du système pour permettre de déterminer la nouvelle position de l'article et relancer une séquence de chargement à vitesse réduite vers une ou plusieurs unités de chargement. Le transfert est effectué vers une ou plusieurs unités de chargement tout en assurant le maintien en position de l'article pendant son déplacement sur la trieuse jusqu'à sa destination de sortie.

Dans un exemple non limitatif, le procédé objet de l'invention met en oeuvre notamment des bandes équipées de profils verticaux qui sont pré-positionnés avant la station de chargement puis déplacées lors du transfert des articles sur les unités de transport afin de placer les articles entre des profils verticaux lorsqu'ils se trouvent sur l'unité de transport.

Dans ce cas, la detection d'un mouvement des profils verticaux d'une bande lorsque qu'un article est transporté permet d'agir sur le moteur de la bande pour positionner les profils verticaux dans leur position optimale de transport.

L'invention est particulièrement adaptée pour le tri des articles longs qui peuvent être placés sur au moins deux unités de transport adjacentes en assurant le positionnement de l'article long entre les profils verticaux des, au moins deux, unités de transport.

Nous analysons les problèmes qui peuvent se produire face à un bagage instable sur la machine de tri « cross belt ».

Pour le chargement sur la machine de tri, le bagage est accéléré par les convoyeurs de la station 3 de chargement de la machine, orientés à 30 ° par rapport à la direction de la machine de tri, à la vitesse nécessaire au transfert sur la trieuse. Avec l'activation de la bande 5 de l'unité de transport 2 de la machine de tri qui reçoit le bagage, on obtient la caractéristique typique du « cross belt » : que le transfert a lieu en l'absence d'accélérations susceptibles d'affecter la stabilité des bagages. En effet, au cours du transfert, le vecteur vitesse du bagage est égal au vecteur vitesse de la bande du convoyeur à bord (détail de la figure 1).

La station de chargement est équipée de capteurs optiques et de la logique de contrôle qui permettent de corriger les effets dus à l'instabilité des bagages au cours de la phase d'accélération, et aussi capable d'interrompre la phase de chargement quand un excès de glissement ou de roulement des bagages est détecté.

Dans ce dernier cas, la méthode proposée inclut la possibilité que la station de chargement automatique puisse envoyer automatiquement au traitement manuel le bagage après glissement ou roulement excessif.

Dans le cas où le glissement ou le roulement provoquent une erreur trop importante pour être corrigée de façon dynamique, la station est capable d'arrêter l'objet sur la ligne et d'exécuter automatiquement une nouvelle procédure de chargement, en réservant deux unités de transport adjacentes pour l'objet instable pour avoir une marge de sécurité. La trajectoire de chargement est exécutée en utilisant une valeur d'accélération très réduite : l'objet est chargé et routé vers la destination de sortie, ou à une sortie pour le traitement manuel, si nécessaire pour éviter les risques.

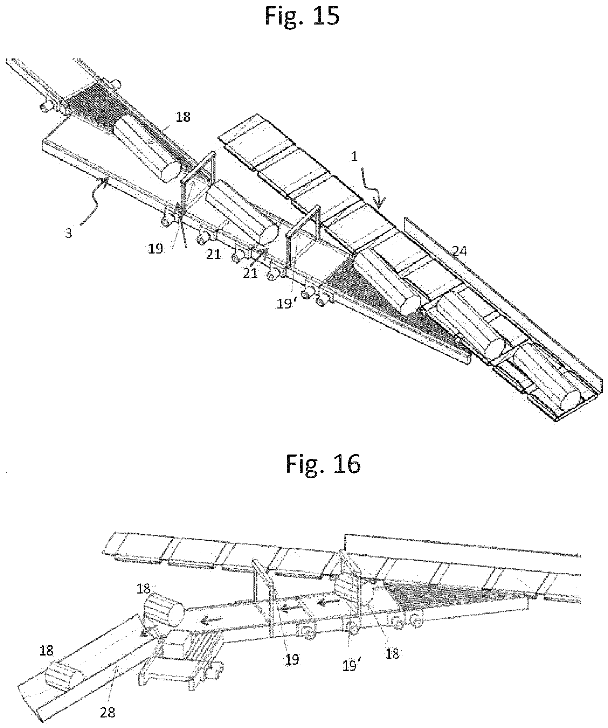

En outre, on peut équiper la station de chargement d'une solution de rejet d'une manière automatique des bagages qui ont été identifiés comme particulièrement instables : dans ce cas, après avoir arrêté le bagage sur la ligne de chargement, le mouvement des bandes transporteuses est inversé, de manière à envoyer le bagage à une goulotte pour le traitement manuel (Fig 15).

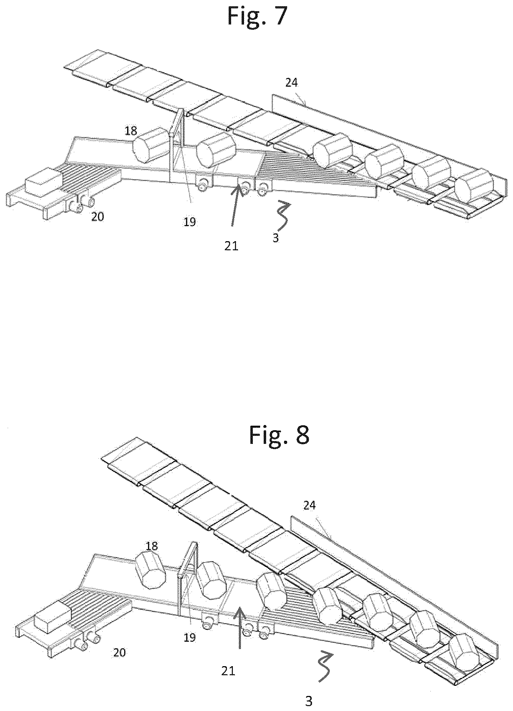

Au cours de la phase de transfert du bagage à bord, la bande 5 du chariot est activée : de cette manière le bagage est transféré sur le l'unité de transport 2 avec exactement les mêmes composantes de vitesse du convoyeur : dans le sens machine et dans la direction orthogonale à la direction de la machine. Ainsi, le transfert des bagages à bord se déroule sans accélération. Toutefois, après le transfert, il est nécessaire de décélérer le convoyeur pour arrêter le bagage à bord : la valeur de décélération est réduite, mais peut encore entraîner une perte de stabilité si le bagage est instable avec un roulement possible dans la direction orthogonale à la direction de la machine. Dans ce cas les barrières verticales (24, Fig 7) sur le côté de la machine de tri, à l'opposé du poste de chargement sont efficaces pour arrêter le bagage sur le convoyeur du chariot.

L'utilisation de la barrière verticale ne pose aucun problème parce qu'elle ne peut pas provoquer des interférences dans le cas de pièces tels que des sangles de bagages qui tombent de la bande transporteuse, de plus la barrière est installée le long d'une trajectoire rectiligne. Donc il n'y a pas d'effet de serrage entre le chariot et la barrière verticale, comme ce serait le cas dans une trajectoire en courbe.

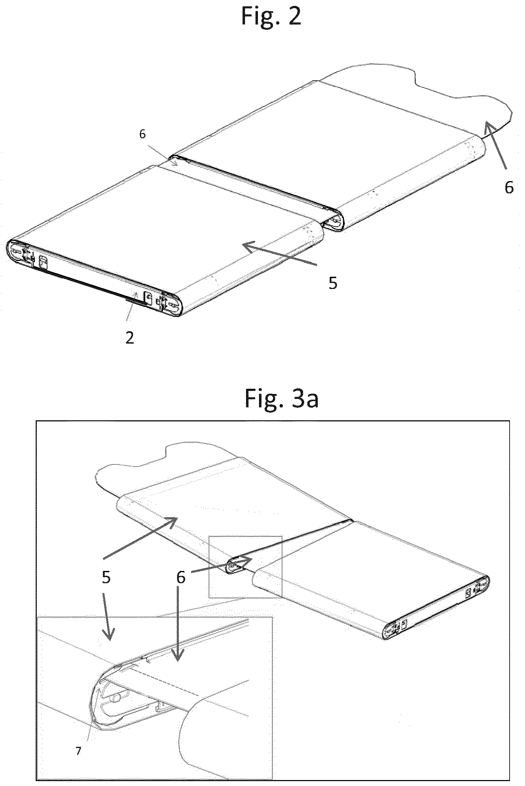

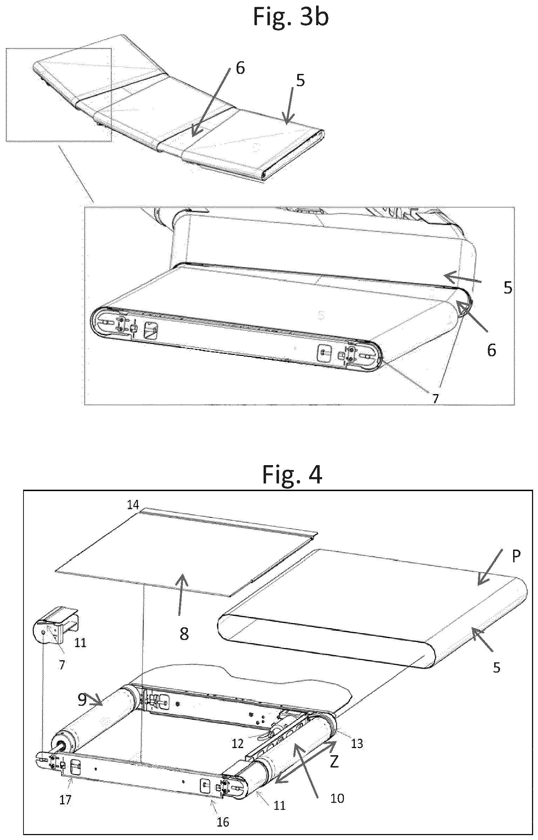

Cependant, l'interférence d'un bagage peu stable avec la barrière verticale peut provoquer la rétraction de bagages par rapport à la position théorique du chargement sur le convoyeur du chariot : en raison de la friction avec la barrière verticale, le bagage peut en fait glisser ou rouler en arrière sur la table de séparation entre les chariots et en partie sur le convoyeur du chariot suivant. Dans ce cas, la méthode proposée prévoit que la machine de tri soit totalement tolérante des bagages qui roulent dans la direction opposée au mouvement de la machine : quelle que soit la position du bagage il ne doit pas provoquer d'interférences, même en correspondance des courbes de la machine de tri, où les chariots tournent par rapport à l'autre. Pour atteindre cet objectif, une plaque support 6, (fig 3) en matière plastique est placée entre deux convoyeurs adjacents, fixée sur le côté de l'une et pénétrant dans le côté de l'autre : avec la caractéristique de couvrir complètement la surface entre les convoyeurs, même dans les courbes et jusqu'aux extrémités latérales des convoyeurs, grâce à une conception innovante. La méthode implique également l'utilisation de capteurs optiques et une logique de commande pour déterminer la position finale du bagage sur la machine après le chargement : dans le cas d'un roulement, le bagage peut être partiellement sur la table entre les convoyeurs ou sur la bande suivante, libre ou s'appuyant contre un autre bagage.

Quand le bagage ne peut être trié vers sa destination en toute sécurité, le système de contrôle envoie le bagage à une station de traitement manuel, qui est convenablement dimensionnée pour également recevoir deux bagages triés en même temps parce que l'un des deux a roulé contre l'autre.

Pour être capable de trier dans tous les cas le bagage qui est localisé dans un emplacement incorrect sur la machine de tri, il est aussi nécessaire que le bagage traitable avec une taille minimale, qui a roulé sur la table entre les cellules, ait cependant un contact suffisant avec un ou deux des convoyeurs. Il faut éviter que les bagages restent sur la plaque support 6 sans être en mesure d'être triés, car ils rateraient le départ du vol et il serait également nécessaire d'arrêter le trieur pour les enlever. Pour satisfaire à toutes les conditions exprimées par la méthode, il est nécessaire d'une part que l'espace entre les deux bandes adjacentes soit couvert par une table à faible friction qui peut supporter tout type de bagages, et aussi qu'il soit sans ouverture également dans les courbes. D'autre part, il est nécessaire que la plaque support soit réduite en longueur pour être capable de trier un bagage à la taille minimale, qui serait placé entre les deux convoyeurs.

Considérons maintenant le problème posé par le bagage instable en correspondance des courbes dans le sens de la machine de tri, en particulier lorsque le rayon des courbes est limité et une vitesse élevée est nécessaire. Par exemple, avec le rayon de courbure de 4000 mm et une vitesse de 2,5 m/s l'accélération centrifuge est 1,6 m/s2 ; si la vitesse est de 3m/s, l'accélération est de 2,2 m/s2. Dans ce cas, le bagage est soumis à une force latérale importante, s'il n'est pas très stable il peut rouler latéralement.

Pour éviter que les bagages peu stables ne tombent latéralement en courbe, les barrières verticales, qui suivent le chemin de la courbe de la machine, ne sont pas une solution sûre. Elles sont souvent utilisées, mais avec le risque de graves dommages pour les bagages et pour la machine de tri pour les raisons suivantes. La machine de tri est équivalente à une chaîne constituée de chariots avec un certain pas. Dans le cas des bagages, ce pas est supérieur à un mètre : en courbe les chariots de la machine sont disposés selon une ligne polygonale, entre la barrière verticale et les chariots, il y a des fentes verticales, particulièrement importantes lorsque le rayon de courbure ne peut pas être très grand par rapport au pas des chariots. Des bagages et des sangles peuvent s'insérer dans les fentes, et dans ce cas peuvent provoquer des interférences mécaniques sérieuses parce que les fentes verticales sont fermées le long de la courbe lorsque les chariots se déplacent dans les courbes, créant ainsi les conditions pour un cisaillage très dangereux pour les bagages et pour machine.

Pour ces raisons, l'utilisation de barrières verticales dans des courbes, afin de retenir les bagages instable sur la machine de tri, n'est pas une solution adéquate car elle réduit la fiabilité et la disponibilité de la machine.

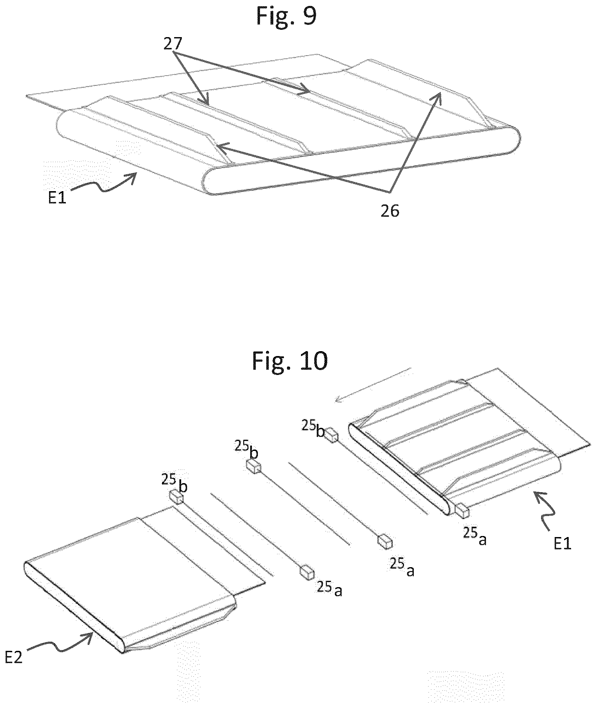

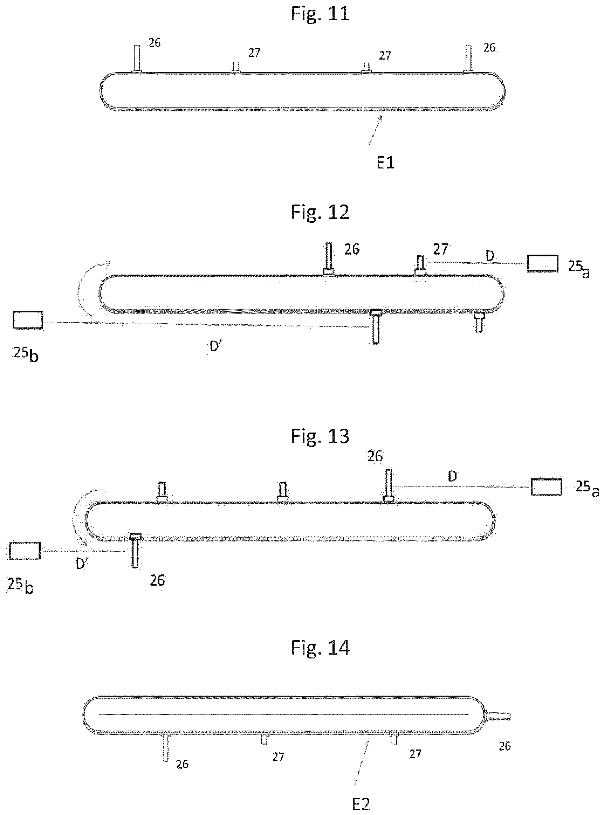

Pour améliorer le traitement des bagages peu stable dans les courbes, la méthode propose d'équiper le convoyeur de la machine de tri avec des profils verticaux 26 pour contrer le roulement des bagages (Fig. 9). Avant la station de chargement, la position du convoyeur est ajustée de façon appropriée pour que, avec l'activation du convoyeur pendant la phase de chargement, le bagage soit centré par rapport aux profils verticaux 26. La figure 8 montre une séquence de chargement du bagage instable et mal orienté, donc soumis à un éventuel roulement en courbe. Les unités 2 sont préparées avant le chargement selon la configuration E2 de la figure 14. Le chargement terminé, comme représenté à la figure 8, la bande 5 prend la configuration E1 de la figure 9 avec les bagages centrés entre les profils verticaux externes.

Les profils centraux 27 peuvent être ajoutés, de moindre hauteur et faits d'un matériau d'une dureté plus faible que les profils extérieurs, capables de s'adapter à la base des bagages, afin d'améliorer les conditions de frottement, en coopérant avec des profils plus hauts pour le traitement en courbe et pour le tri d'articles peu stables. La méthode propose également des actions correctrices pour maintenir l'efficacité de cette solution en courbes, surtout quand l'application requiert des vitesses supérieures à 2,5 m/s. Dans ce cas, le convoyeur peut être déplacé par la réaction d'inertie de bagages, car la force agissant sur les bagages à cause de l'accélération centrifuge atteint la valeur de la force de frottement entre la face inférieure de la bande et la surface sur laquelle il glisse.

La méthode propose de contrôler activement la position des profils verticaux avec des capteurs pour mesurer la distance, éventuellement de corriger la position et ensuite exercer une fonction de freinage le long de la courbe, en agissant sur le servo-moteur de l'unité de transport 2.

En appliquant les solutions précédentes, la méthode permet également le traitement des bagages ou des colis très long, qui nécessite le chargement de deux ou plusieurs unités 2 de chargement, y compris ceux très instables comme de longs colis avec une base de soutien étroit, des sacs longs pour les équipements sportifs ou des articles enveloppés de forme presque cylindrique. Pour ces types d'articles la solution préférée est celle avec les stations de chargement orientées à 15°, selon la station de chargement 3 de la figure 15, de sorte que le long bagage est déjà orienté dans un sens favorable pour le transfert sur la machine de tri, dont la composante de vitesse orthogonale à la direction de la machine n'est que de 26% de la vitesse de la machine et que la décélération nécessaire pour arrêter le colis sur la machine est faible, de l'ordre de 1,5 m/s2. La station de chargement 3 sera capable d'activer simultanément les unités 2 de transport destinés à recevoir le bagage ou le colis 18 long de sorte qu'à la fin du chargement il arrive entre les profils verticaux 26 des convoyeurs où il est chargé, comme indiqué dans le détail de la figure 15.

Ainsi dans les applications pour les bagages d'aéroport, la méthode proposée pour le traitement des colis y compris très longs et peu stables, peut être utilement appliquée dans le domaine des installations de triage pour les courriers afin d'élargir la gamme des colis qui peuvent être traités directement par la machine de tri, comprenant une grande partie des dits articles irréguliers qui sont habituellement traités manuellement.

Les problèmes exposés ci-dessus ne peuvent pas être résolus en utilisant les solutions actuellement disponibles dans les différents modes de réalisation de la machine de tri « cross belt ». Les conditions à respecter peuvent être résumées en termes pratiques : la plaque support entre bandes adjacentes ne doit pas avoir d'ouvertures, même en courbe, doit être compatible avec convoyeurs de grande dimension, environ 1000x1000 mm, qui sont nécessaires pour traiter les bagages sur des chariots avec un pas d'environ 1200mm ; elle doit se prolonger jusqu'à l'extrémité des convoyeurs, doit permettre de réaliser des courbes dans les deux sens avec un rayon de courbe moyen non supérieur à 4000 mm. En outre, la plaque support doit être en un matériau à faible frottement installé au niveau de quelques millimètres, par exemple 3 mm, en dessous du niveau des bandes 5 de transport. La plaque support doit être suffisamment courte, pas plus de 200 mm, afin d'éviter que les bagages d'une taille minimale ne puissent rester bloqués là, sans la possibilité d'être triés.

Il existe déjà des solutions pour le convoyeur du « cross belt » avec une plaque support qui peut pénétrer dans le côté du convoyeur adjacent, mais celles-ci nécessitent que la table soit plus étroite par rapport à la longueur de la bande, pour éviter toute interférence avec les rouleaux : les convoyeurs « cross belt » pour bagages doivent être particulièrement robustes, et les rouleaux doivent être nécessairement de grand diamètre, par exemple 100 mm, par conséquent, pour éviter toute interférence avec les rouleaux, la plaque support laisse de larges ouvertures sur les côtés. Ces ouvertures sont complètement ouvertes ou fermées en fonction du sens des virages : ainsi, les ouvertures pourraient attraper les pièces de bagages exposant au risque de graves dommages pour la machine de tri et pour les bagages.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. L'étendue de la protection de l'invention est définie par les revendications. Sur ces dessins :
- Fig. 1 est un schéma d'ensemble d'un exemple de machine de tri.
- Fig. 2 est un schéma montrant en détail 2 unités de chargement selon l'invention.
- Fig. 3a est un schéma de 2 unités de chargement en courbe selon l'invention.
- Fig. 3b est un schéma de 2 unités de chargement en courbe selon un autre mode de réalisation.
- Fig. 4 est un schéma d'une vue éclatée d'une unité de transport.
- Fig. 5 est une vue détaillée de 2 unités de transport en courbe.
- Fig. 6 est une autre vue détaillée de 2 unités de transport en courbe.
- Fig. 7 montre la séquence de chargement d'un bagage peu stable.
- Fig. 8 montre la séquence de chargement d'un bagage peu stable mal positionné.
- Fig. 9 est une représentation des profils verticaux.
- Fig. 10 est une représentation d'une zone de pré-positionnement.
- Fig. 11 est la position d'une unité de chargement après le chargement.
- Fig. 12 et 13 représentent différentes étapes lors du positionnement de la bande de transport.
- Fig. 14 est la position de la bande avant le chargement.
- Fig. 15 est un schéma d'une séquence de chargement d'un produit long.
- Fig. 16 est une vue schématique d'une séquence de rejet automatique.

Pour répondre aux conditions, à la base de la méthode dans le cas des grandes unités de tri pour les bagages, par exemple 1000x1000 mm et des courbes avec un rayon maximale de 4000 mm, la présente demande propose une solution innovante pour la conception du convoyeur de l'unité tri, sur la base du fait que les deux rouleaux 9 et 10) sont plus courts que la largeur du convoyeur, de sorte que la plaque support 6 peut arriver aux extrémités et qu'elle peut tourner en courbe sans interférence.

La figure 3 montre que la fente 7, où la plaque support 6 peut tourner entre les unités de transport 2, s'étend aux extrémités, grâce à l'absence d'interférence avec les deux rouleaux. Les figures 2, 3a et 3b montrent des unités de tri selon l'invention sur une trajectoire rectiligne et courbe. Pour obtenir ce résultat, la nouvelle réalisation de l'unité 2 de chargement (Fig. 4), consiste à utiliser les deux rouleaux moteur et tension 9 et 10 selon la version avec un axe fixe, puis avec les roulements intégrés dans le cylindre, ce qui nous permet d'avoir le cylindre extérieur des rouleaux plus court par rapport à l'arbre, de sorte qu'il soit même plus court que la largeur de la bande 5. La surface de contact entre le cylindre extérieur et la bande correspond à la zone de contact Z. De cette façon, il peut être installé sur l'arbre fixe une pièce 11 avec une surface courbe qui prend la place de la partie manquante du cylindre : la surface courbe suit exactement le profil du cylindre extérieur du rouleau, de sorte que la bande 5 puisse aussi glisser sur la partie fixe, en assurant la continuité. La surface courbe 11 permet le glissement de la bande mais avec une plus grande friction sur un côté, ce problème a une solution, décrite dans un paragraphe suivant.

La pièce 11, étant une partie fixe montée sur l'arbre, permet d'obtenir une fente 7 au-dessous de la surface courbe (détail de la figure 3), qui représente la continuité de la fente sur le côté du convoyeur pour recevoir la plaque support 6 de sorte qu'elle puisse s'étendre jusqu'à l'extrémité de la bande, et puisse également tourner librement en correspondance avec les courbes, ne rencontrant pas d'interférences avec les rouleaux. Grâce au fait que les pièces avec une surface courbe 11 soient montées sur le même arbre des rouleaux, la bande 5 peut «glisser avec continuité» sur la partie fixe, même si la position et l'inclinaison du rouleau sont modifiées pour la tension et le centrage de la bande 5. La figure 4 montre une vue éclatée avec le rouleau tendeur 9 : sur son arbre est montée la pièce 11 avec la surface courbe pour le glissement de la bande et la fente 7 où la plaque support 6 peut glisser entre les unités de transports 2.

La fente 7 est inclinée par rapport au plan P défini par la surface d'appui des articles sur l'unité 2. Elle est opportunément façonnée et à un faible coefficient de friction de sorte qu'elle puisse pousser la plaque à une déformation qui se rapproche de la courbe de la surface sur laquelle glisse la bande, de sorte que la plaque peut réaliser une couverture totale entre les bandes, également dans la courbe, comme le montre la figure 3a. La plaque peut être réalisée avec des polymères pour les caractéristiques de résistance et d'élasticité nécessaires.

La courbe de la plaque support 6 vers le bas, visible dans le détail de la figure 3a, pour couvrir la surface du transport même dans les courbes, est aussi très utile pour réduire la possibilité d'interférence lors de la phase de chargement avec les parties saillantes rigides des bagages tels que des roues, des pièces métalliques, des bords.

Une réalisation alternative de la fente 7 est représentée sur la figure 3b. Dans cette variante de réalisation de l'invention, la fente 7 a un rayon de courbure légèrement inférieur à celui du rouleau de sorte que la plaque support 6 suive au plus prés la courbe de la bande 5 au passage des rouleaux 9 et 10.

La solution des rouleaux 9 et 10 plus courts que la largeur de la bande 5 implique cependant que la bande, sur le côté où elle glisse sur la surface courbe 11, est soumis à une force de frottement supérieure à celle présente sur l'autre côté : cet effet asymétrique exige une compensation convenable pour le maintien à long terme de la condition de centrage de la bande, compatible avec le fait que la bande est activée dans les deux sens.

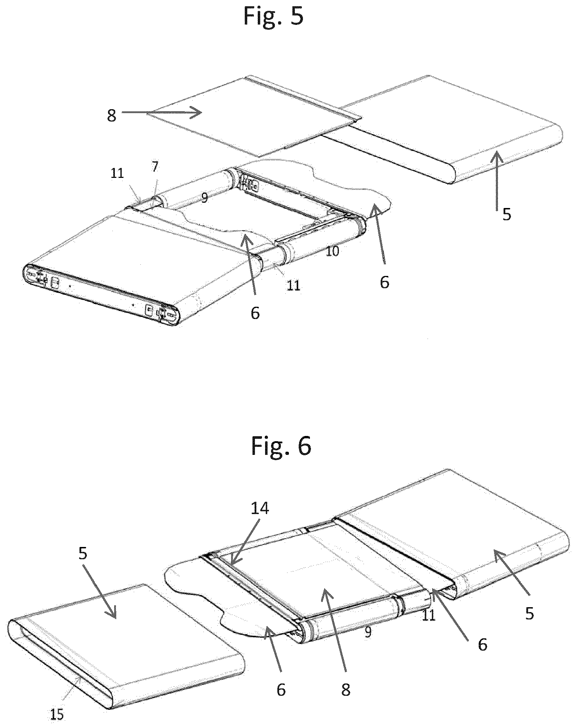

La solution étudiée est basée sur l'utilisation de rouleaux cylindriques, non profilés pour la fonction d'auto-centrage, la bande présentant un profil de guidage latéral 15 sur la face intérieure, sur le côté opposé à celui dans lequel la courroie glisse sur la surface fixe 11. La solution est représentée par la figure 6 : le profil de guidage 15 passe dans une gorge 14 présente sur la table 8 de glissement de la bande. Le profil de la bande est logé dans les rouleaux d'entraînement 10 et de tension 9 dans une cavité plus étroite par rapport à celle de la table 8 de glissement. Le profil 15 guide la bande 5 afin qu'elle reste centrée durant les activations dans les deux sens.

Mais la tâche de correction des asymétries stationnaires en tension de l'unité 2 de transport n'est pas laissée au profil, car dans ce cas, ce dernier serait soumis à une pression constante, à l'usure sur les côtés et le profil pourrait même sortir du guide, causant des dommages critiques pour le convoyeur.

Aussi, pour compenser les asymétries de la distribution des forces le long des rouleaux, principalement en raison de la plus grande friction sur un côté, mais également à d'autres effets secondaires tels que l'élasticité différente de la bande 5 en raison de la présence du profil 15 soudé sur l'autre côté, et à des imperfections de fabrication, la nouvelle conception prévoit l'addition de réglage de l'inclinaison aussi sur le rouleau d'entraînement, ainsi que sur le rouleau tendeur. La figure 4 montre le rouleau d'entraînement 10 avec le réglage d'inclinaison 16 et le rouleau de tension 9 avec le réglage 17 de mise en tension, qui est également présent sur l'autre côté. Pour compenser les effets asymétriques, il est nécessaire d'appliquer une plus forte tension sur le côté opposé à celui du profil, obtenue par l'augmentation de la distance entre les rouleaux sur le même côté. L'augmentation de la distance entre les rouleaux sur un côté est obtenue par inclinaison de manière symétrique à la fois du rouleau tendeur 9 et du rouleau d'entraînement 10. De cette manière, il n'y a pas de couple agissant sur le profilé de guidage 15 de la bande, et par conséquent, la fiabilité et la durabilité de la bande ne sont pas affectées, comme cela se produirait si on utilisait uniquement le réglage de l'inclinaison du galet tendeur. L'inclinaison requise pour le rouleau d'entraînement 10 est généralement inférieure à 0,3 degrés, compatible avec l'utilisation d'une courroie de transmission 13 standard avec le moteur électrique 12.

Pour réduire la longueur de la table, afin d'éviter qu'un bagage des dimensions minimales ne reste sur la table, il est nécessaire que le moteur 12 et la courroie d'entraînement 13 du rouleau ne constituent un obstacle à la rotation du convoyeur. Par conséquent la solution préférée est un moteur électrique avec une transmission à courroie sur le rouleau d'entraînement, installé à l'intérieur de la bande, sur le côté opposé à celui destiné à recevoir la plaque support, comme représenté sur la figure 4.

Considérons maintenant les ajouts liés à la bande 5 afin de réduire la possibilité qu'un bagage peu stable ne puisse rouler dans les courbes de la machine de tri. La solution proposée (Fig. 9) est de doter la bande de deux profilés extérieurs 26 de 80-100 mm de hauteur pour empêcher le roulement, et aussi, de préférence, de deux profilés internes 27 d'environ 30 mm de haut, facilement déformable pour s'adapter aux surfaces du bagage instable afin d'augmenter la stabilité et d'améliorer l'adhérence. Le nombre de profilés verticaux, la hauteur et leur disposition peut varier, l'arrangement de la figure 9 est un exemple.

Les convoyeurs avec des profils sont généralement utilisés pour limiter le glissement et le roulement des articles transportés dans des applications nécessitant des changements de niveau très raides. Le grand diamètre des rouleaux des convoyeurs sur le chariot « cross belt » pour les bagages est compatible avec les spécifications pour l'utilisation de solutions déjà disponibles dans le commerce. Dans la figure 10 est montré le convoyeur « cross belt » à la position E2, prêt à recevoir le bagage pendant la phase de chargement, de sorte que, avec l'activation de la bande pendant le chargement, le bagage soit à l'intérieur de la zone délimitée par les deux profilés élevés 26 avec la bande en position E1.

Le positionnement de chaque bande « cross belt » est commandé par une position de contrôle qui précède un groupe de stations de chargement automatique sur la machine « cross belt ». Chaque convoyeur est activé (Fig. 12 et 13) de sorte que la position E2 des profils soit comme le montre la figure 14. Le positionnement du convoyeur exige une bonne précision et se déroule donc en boucle fermée : l'activation du convoyeur est réglée de manière continue par mesure à la position des profilés.

La station de pré-positionnement est munie de capteurs laser 25 pour détecter les profilés verticaux 26 et 27 fournissant la mesure de la distance. Les capteurs 25 sont disposés sur les côtés de la machine, comme le montre la figure 10 : les capteurs 25a sur un côté explorant la face supérieure de l'unité de transport 2, tandis que les détecteurs de l'autre côté 25b pour la face inférieure de l'unité de transport 2. Les capteurs de chaque côté sont disposés mutuellement à une distance inférieure à la largeur du convoyeur, de sorte que le système de commande, qui mesure l'avancement du chariot de la machine de tri, à chaque instant, peut lire en séquence les capteurs, et ainsi reconstruire un signal continu de rétroaction pour le positionnement précis des profilés de la bande 5.

La station de pré-positionnement comprend également des dispositifs pour la transmission de la commande d'activation des servomoteurs de l'unité de transport 2 : lors du passage du chariot, sa bande est mise en rotation pour atteindre la configuration E2 de la figure 14, c'est à dire avec le capteur 25a par rapport à la face supérieure de la bande qui ne détecte pas de profils verticaux, tandis que le capteur 25b par rapport à la face inférieure de la bande qui détecte le profilé à une distance de référence donnée. Les figures 12 et 13 montrent deux situations de départ différentes et l'action du système de commande pour arriver à la position E2

À la sortie des convoyeurs synchroniseurs ou moyens de transport 21, un système 19, 19' permet de détecter un éventuel changement de position des bagages 18 et l'importance de celui-ci. Ce système est par exemple constitué d'une barrière de cellules photoélectriques 19, 19' ou de deux barrières successives. Ces barrières peuvent avoir une détection latérale ou verticale. Le système 19, 19' est utilisé par le système de contrôle pour vérifier s'il y a eu un changement de position, par exemple un glissement ou un roulement de bagages au cours de la phase d'accélération. Le système 19, 19' permet d'apprécier l'importance de ce changement de position du bagage 18 sur les moyens de transport 21 de la station de chargement 3. Dans le cas où le changement de position est limité, la compensation ou la correction de la position est faite dynamiquement, par exemple par la création d'un écart de vitesse entre la bande de transport des moyens de transport 21 où se trouve le bagage et la bande de transport suivante. Le repositionnement est ainsi obtenu lors du passage du bagage d'une bande à l'autre. La bande de transport peut être composée de plusieurs bandes parallèles qui peuvent être accélérées, ralenties ou arrêtées indépendamment pour pourvoir repositionner les bagages ayant changé de position.

Si le changement de position détecté est important pour une correction dynamique, le bagage est arrêté, puis le mouvement de la bande de transport des moyens de transport 21 de la station de chargement 3 est inversé pour ramener le bagage en amont du système 19, 19'. Ce changement de direction du bagage peut suffire à le placer dans une position stable, dans une position appropriée pour une nouvelle phase de chargement. Dans le cas de bagage ayant eu un changement de position important, deux unités (2) de transport adjacentes sont réservées au bagage. Celui-ci est transféré à bord de ces deux unités de transport grâce à une trajectoire de chargement à faible accélération. Il est généralement dirigé vers un poste de travail manuel.

La figure 7 montre la séquence de chargement d'un bagage peu stable, par exemple un sac de forme presque cylindrique, correctement orienté par rapport au convoyeur de chargement 20 : le bagage passe sous la barrière optique verticale 19, composée de cellules photoélectriques indépendantes installées en parallèle et avec un très petit pas, de l'ordre de 30 mm, pour effectuer une analyse précise du bagage en transit.

La barrière comprend une ligne d'émetteurs de rayons infrarouges et d'une ligne de récepteurs correspondants : la transmission de lumière de l'émetteur vers le récepteur est coupée par le passage du bagage. Le système de contrôle lit à intervalles réguliers l'état des émetteurs afin de déterminer la forme, la position et l'orientation des bagages, des informations nécessaires à l'exécution correcte du chargement sur l'unité de tri. Après être passé sous la barrière optique, le bagage est progressivement accéléré par les convoyeurs synchroniseurs ou moyen de transport 21 jusqu'à la vitesse de charge, soit 15% de plus que la vitesse de la machine de tri, car la station de chargement est orientée à 30° par rapport à la drection de la machine de tri.

Dans le cas d'un bagage particulièrement instable, détecté en roulement évident, la procédure de rejet automatique rapide peut être activée directement sur la station de chargement (Fig.16). Les bandes de la station de chargement sont arrêtées, puis le mouvement de la bande est inversé de sorte que le bagage instable, et éventuellement un bagage suivant déjà présent sur la ligne, soit envoyé vers une goulotte 28 placée au début de la ligne de chargement pour la reprise manuelle, libérant rapidement la station de chargement 3.

La figure 8 montre le chargement d'un bagage instable qui passe sous la barrière optique avec une orientation incorrecte. Dans ce cas, lors de la décélération sur l'unité de tri, les bagages pourraient rouler dans une direction perpendiculaire à la machine : les profils de confinement du convoyeur ne peuvent pas être suffisants pour empêcher le roulement, cependant les bagages seraient arrêtés par la barrière verticale 24 située en correspondance de la station de chargement. Dans ce cas, le bagage peut encore rouler dans la direction opposée à la machine. La couverture totale entre les bandes, déjà décrite, évite les interférences ou des dommages : il est nécessaire, cependant, de localiser la position finale du bagage afin de résoudre le problème avec le tri automatique du bagage en toute sécurité à une station de traitement manuel.

Une station de contrôle est prévue après chaque groupe de stations de chargement pour s'assurer que tous les bagages soient chargés correctement sur la machine de tri. Avec les barrières de cellules photoélectriques latérales, la position de chaque bagage en référence au convoyeur sur lequel il doit être chargé est vérifiée au passage des chariots. L'absence du bagage instable en référence à son convoyeur est donc détectée et le bagage est localisé sur un convoyeur suivant libre ou déjà occupé : dans ce cas, les deux bagages sont triés à la station de traitement manuel.

## Revendications

1. Dispositif (1) de tri d'articles (18), incluant des articles instables, comprenant au moins une station (3) de chargement automatique d'articles (18) équipée d'au moins un moyen de transport (21) des articles (18) et d'un système (19, 19') apte à déterminer la position, la forme et la taille des articles (18), un ensemble d'unités (2) de transport à bande croisée (5), une plaque support (6) étant disposée entre deux unités (2) de transport adjacentes et étant apte à assurer en permanence une continuité de surface d'appui entre les dites deux unités (2) de transport adjacentes sur une largeur sensiblement égale à la surface d'appui des bandes croisées (5), et un système de contrôle du ou des moyens de transport (21), la station (3) permettant de transférer les articles (18) vers une ou plusieurs des unités (2) de transport, **caractérisé en ce que** :
- le système (19, 19') est apte à détecter un éventuel changement de position d'un article (18), et l'importance de celui-ci, sur le moyen de transport (21) lors d'une phase d'accélération du moyen de transport (21) pour transférer l'article (18) sur une ou plusieurs unités (2) de transport,
- le système de contrôle est apte à contrôler le ou les moyens de transport (21) en fonction d'un éventuel changement de position d'un article (18) détecté par le système (19, 19').

2. Dispositif de tri d'articles (18) selon la revendication 1, **caractérisé en ce que** les unités de transport (2) comprennent des rouleaux (9, 10) de transport de la bande (5) dont la zone de contact (Z) avec la bande (5) est plus courte que la largeur de bande (5).

3. Dispositif de tri d'articles (18) selon la revendication 2, **caractérisé en ce qu'**il comprend des pièces (11) avec une surface courbe suivants les profils des cylindres extérieurs des rouleaux (9, 10) permettant de maintenir la partie de la bande (5) non supportée par les rouleaux (9, 10).

4. Dispositif de tri d'articles (18) selon la revendication 3, **caractérisé en ce que** les pièces (11) avec une surface courbe possèdent une fente (7) inclinée par rapport au plan (P) défini par la surface d'appui des articles sur l'unité (2) de transport permettant d'accueillir les plaques support (6).

5. Dispositif de tri d'articles (18) selon la revendication 4, **caractérisé en ce que** les unités (2) de transport comprennent des moyens (16, 17) de réglage de l'inclinaison des rouleaux (9,10) permettant un éloignement symétrique des extrémités des rouleaux.

6. Dispositif de tri d'articles (18) selon l'une quelconque des revendications 1 à 5, **caractérisé en ce que** les bandes de transport (5) comprennent des profils verticaux (26) assurant le maintien des articles sur les unités (2) de transport pendant leurs déplacements sur la trieuse, notamment lors des virages conduisant à une forte vitesse d'accélération des articles.

7. Dispositif selon la revendication 6, **caractérisé en ce qu'**il comprend des équipements de contrôle (25) et de commande aptes à détecter la position des profils verticaux (26) et à positionner les bandes (5) avant la station de chargement (3) et pendant le chargement des articles (18) afin de placer les articles (18) entre des profils verticaux (26) lorsqu'ils se trouvent sur l'unité (2) de transport.

8. Dispositif selon la revendication 7, **caractérisé en ce que** les équipements de contrôle et de commande sont aptes à détecter un mouvement des profils verticaux (26) d'une bande (5) lorsqu'un article (18) est transporté et à agir sur un moteur d'entraînement de la bande (5) pour positionner les profils verticaux dans leur position optimale de transport.

9. Dispositif selon l'une quelconque des revendications précédentes, **caractérisé en ce que** le mouvement des moyens de transport (21) de la au moins une station (3) de chargement automatique d'articles (18) peut être inversé.

10. Procédé de tri d'articles (18) mettant en oeuvre le dispositif (1) selon l'une quelconque des revendications précédentes, caractérisé notamment par les étapes consistant à :
- détecter, par le système (19, 19'), un éventuel changement de position d'un article (18) sur le moyen de transport (21) lors de la phase d'accélération du moyen de transport (21) pour transférer l'article (18) sur une ou plusieurs des unités (2) de transport ;
- contrôler, par le système de contrôle, le ou les moyens de transport (21) en fonction d'un éventuel changement de position d'un article (18) détecté lors de l'étape précédente.

11. Procédé selon la revendication 10, **caractérisé en ce que** :
- si le changement de position de l'article (18) détecté est trop important pour permettre sa prise en charge automatique par les unités (2) de transport, la station de chargement (3) l'évacue vers une zone de traitement manuel ;
- si le changement de position de l'article (18) détecté est faible, la station de chargement (3) fait varier la vitesse du moyen de transport (21) afin decorriger dynamiquement la position de l'article (18) sur ce moyen de transport (21) pour retrouver une position compatible avec le transfert sur les unités (2) de transport ;
- si le changement est important, la station de chargement (3) renvoie l'article (18) en amont du système (19, 19') pour permettre de déterminer la nouvelle position de l'article (18) et relancer une séquence de chargement à vitesse réduite vers une ou plusieurs unités (2) de transport ;

12. Procédé selon la revendication 11, le moyen de transport (21) comprenant plusieurs bandes de transport, **caractérisé en ce que** la variation de la vitesse du moyen de transport (21), dans le cas d'une détection d'un faible changement de position de l'article (18), comprend la variation de la vitesse d'au moins une des bandes de transport.

13. Procédé selon l'une quelconque des revendications 10 à 12, **caractérisé en ce que** les bandes (5) équipées de profils verticaux (26) sont pré-positionnés avant la station de chargement (3) puis déplacées lors du transfert des articles (18) sur les unités (2) de transport afin de placer les articles (18) entre des profils verticaux (26) lorsqu'ils se trouvent sur l'unité (2) de transport.

14. Procédé selon la revendication 13, **caractérisé en ce qu'**il comprend la détection d'un mouvement des profils verticaux (26) d'une bande (5), et **en ce qu'**en cas de détection d'un tel mouvement lorsque qu'un article est transporté, on agit sur le moteur de la bande (5) pour positionner les profils verticaux (26) dans leur position optimale de transport.

15. Procédé de tri d'articles selon la revendication 13, **caractérisé en ce que** les articles longs sont placés sur au moins deux unités de transport (2) adjacentes en assurant le positionnement des articles long entre les profils verticaux (26) des, au moins deux, unités de transport (2).

## Patentansprüche

1. Vorrichtung (1) zum Sortieren von Artikeln (18), einschließlich der instabilen Artikel, umfassend mindestens einer Station (3) zum automatischen Verladen von Artikeln (18), ausgestattet mit mindestens einem Transportmittel (21) von Artikeln (18) und einem System (19, 19'), der in der Lage ist, die Position, die Form und die Größe der Artikel (18) zu bestimmen, einem Satz von Transporteinheiten (2) mit gekreuzten Bändern (5), einer Stützplatte (6), die zwischen zwei benachbarter Transporteinheiten (2) angeordnet ist und die in der Lage ist, dauerhaft eine Auflageflächekontinuität zwischen den zwei benachbarten Transporteinheiten (2) auf einer Breite im wesentlichen gleich der Auflagefläche der gekreuzten Bänder (5) zu gewährleisten, und einem Steuersystem des oder der Transportmittel (21), wobei die Station (3) das Übertragen der Artikel (18) zu einer oder mehreren Transporteinheiten (2) erlaubt, **dadurch gekennzeichnet, dass**:
- das System (19, 19') in der Lage ist, eine mögliche Änderung in der Position eines Artikels (18) und dessen Wichtigkeit auf dem Transportmittel (21) während einer Beschleunigungsphase des Transportmittels (21) zu erfassen, um den Artikel (18) auf eine oder mehrere Transporteinheiten (2) zu übertragen,
- das Steuersystem in der Lage ist, das oder die Transportmittel (21) nach einer möglichen Änderung in der Position eines Artikels (18), die durch das System (19, 19') erfasst wird, zu steuern.

2. Artikelsortiervorrichtung (18) nach Anspruch 1, **dadurch gekennzeichnet, dass** die Transporteinheiten (2) Transportrollen (9, 10) des Bandes (5) umfassen, deren Kontaktzone (Z) mit dem Band (5) kürzer als die Breite des Bandes (5) ist.

3. Artikelsortiervorrichtung (18) nach Anspruch 2, **dadurch gekennzeichnet, dass** sie die Stücke (11) mit einer gekrümmten Oberfläche umfasst, die den Profilen der äußeren Zylinder der Rollen (9, 10) folgen, wobei es erlaubt wird, dass der Teil des durch die Rollen (9, 10) ungestützten Bandes (5) gehalten wird.

4. Artikelsortiervorrichtung (18) nach Anspruch 3, **dadurch gekennzeichnet, dass** die Stücke (11) mit einer gekrümmten Oberfläche einen Schlitz (7) geneigt mit Bezug auf die Ebene (P) aufweisen, die durch die Auflagefläche der Artikel auf der Transporteinheit (2) definiert wird, wobei es erlaubt wird, dass Stützplatten (6) untergebracht werden.

5. Artikelsortiervorrichtung (18) nach Anspruch 4, **dadurch gekennzeichnet, dass** die Transporteinheiten (2) die Mittel (16, 17) zur Neigungseinstellung der Rollen (9, 10) umfassen, die eine symmetrische Entfernung der Enden der Rollen erlauben.

6. Artikelsortiervorrichtung (18) nach einem der Ansprüche 1 bis 5, **dadurch gekennzeichnet, dass** die Transportbänder (5) die vertikalen Profile (26) umfassen, die das Halten der Artikel auf den Transporteinheiten (2) während deren Verschiebungen auf dem Sortierer gewährleisten, insbesondere bei Drehungen, die zu einer hohen Beschleunigungsgeschwindigkeit der Artikel führen.

7. Vorrichtung nach Anspruch 6, **dadurch gekennzeichnet, dass** sie Steuer- und Bedienungseinrichtungen (25) umfasst, die in der Lage sind, die Position der vertikalen Profile (26) zu erfassen und die Bänder (5) vor der Ladestation (3) und während des Verladens der Artikel (18) zu positionieren, um die Artikel (18) zwischen den vertikalen Profilen (26) zu platzieren, wenn sie sich auf der Transporteinheit (2) befinden.

8. Vorrichtung nach Anspruch 7, **dadurch gekennzeichnet, dass** die Steuer- und Bedienungseinrichtungen in der Lage sind, eine Bewegung der vertikalen Profile (26) eines Bandes (5) zu erfassen, wenn ein Artikel (18) transportiert wird und auf einen Antriebsmotor des Bandes (5) zu wirken, um die vertikalen Profile in deren optimalen Transportstellung zu positionieren.

9. Vorrichtung nach einem der vorhergehenden Ansprüche, **dadurch gekennzeichnet, dass** die Bewegung der Transportmittel (21) der mindestens einen Station (3) zum automatischen Verladen von Artikeln (18) umgekehrt werden kann.

10. Verfahren zum Sortieren von Artikeln (18), das die Vorrichtung (1) nach einem der vorhergehenden Ansprüche einsetzt, gekennzeichnet insbesondere durch die folgenden Schritte:
- Erfassen, durch das System (19, 19'), einer möglichen Änderung in der Position eines Artikels (18) auf dem Transportmittel (21) während der Beschleunigungsphase des Transportmittels (21) für die Übertragung des Artikels (18) auf eine oder mehrere Transporteinheiten (2);
- Kontrollieren, durch das Steuersystem, des oder der Transportmittel (21) nach einer möglichen Änderung in der Position eines im vorherigen Schritt erfassten Artikels (18).

11. Verfahren nach Anspruch 10, **dadurch gekennzeichnet, dass**:
- wenn die erfasste Änderung in der Position des Artikels (18) zu groß ist, um durch die Transporteinheiten (2) automatisch übernommen werden zu können, entlädt die Ladestation (3) ihn zu einer manuellen Verarbeitungszone;
- wenn die erfasste Änderung in der Position des Artikels (18) klein ist, lässt die Ladestation (3) die Geschwindigkeit des Transportmittels (21) ändern, um die Position des Artikels (18) auf diesem Transportmittel (21) dynamisch zu korrigieren, damit eine Position, die für die Übertragung auf die Transporteinheiten (2) geeignet ist, wiedergefunden wird;
- wenn die Änderung groß ist, sendet die Ladestation (3) den Artikel (18) stromaufwärts des Systems (19, 19'), um zu erlauben, dass die neue Position des Artikels (18) definiert wird und die Ladesequenz bei reduzierter Geschwindigkeit zu einer oder mehreren Transporteinheiten (2) wiedergestartet wird.

12. Verfahren nach Anspruch 11, wobei das Transportmittel (21) eine Vielzahl von Transportbändern umfasst, **dadurch gekennzeichnet, dass** die Änderung der Geschwindigkeit des Transportmittels (21), falls eine kleine Änderung in der Position des Artikels (18) erfasst wird, die Änderung der Geschwindigkeit von mindestens einem der Transportbänder umfasst.

13. Verfahren nach einem der Ansprüche 10 bis 12, **dadurch gekennzeichnet, dass** die Bänder (5), die mit vertikalen Profilen (26) ausgestattet sind, vor der Ladestation (3) vorpositioniert sind und dann während der Übertragung der Artikel (18) auf die Transporteinheiten (2) verschoben werden, um die Artikel (18) zwischen den vertikalen Profilen (26) zu platzieren, wenn sie sich auf der Transporteinheit (2) befinden.

14. Verfahren nach Anspruch 13, **dadurch gekennzeichnet, dass** es die Erfassung einer Bewegung der vertikalen Profile (26) eines Bandes (5) umfasst, und dass man bei der Erfassung einer solchen Bewegung, wenn ein Artikel transportiert wird, auf den Motor des Bandes (5) wirkt, um die vertikalen Profile (26) in deren optimalen Transportstellung zu platzieren.

15. Artikelsortiervorrichtung nach Anspruch 13, **dadurch gekennzeichnet, dass** die langen Artikel auf mindestens zwei benachbarte Transporteinheiten (2) platziert werden, wobei die Positionierung der langen Artikel zwischen den vertikalen Profilen (26) der, mindestens zwei, Transporteinheiten (2) gewährleistet wird.

## Claims

1. A device (1) for sorting articles (18), including unstable articles, comprising at least one station (3) for automatically loading articles (18) equipped with at least a means (21) for transporting articles (18) and a system (19, 19') capable of determining the position, the shape and the size of the articles (18), a set of transport units (2) with crossed belts (5), a supporting plate (6) being arranged between two adjacent transport units (2) and being able to permanently ensure a continuity of the bearing surface between said two adjacent transport units (2) over a width substantially equal to the bearing surface of the crossed belts (5) and a control system of one or more transport means (21), wherein the station (3) allows for the articles (18) to be transferred to one or several transport units (2), **characterized in that**:
- the system (19, 19') is capable of detecting a possible change of position of an article (18), and the importance thereof, on the transport means (21) during an acceleration phase of the transport means (21) to transfer the article (18) on one or several transport units (2),
- the control system is capable of controlling one or more transport means (21) according to a possible change of position of an article (18) detected by the system (19, 19').

2. The article sorting device (18) according to claim 1, **characterized in that** the transport units (2) comprise transport rollers (9, 10) of the belt (5), the contact area (Z) of which with the belt (5) is shorter than the width of the belt (5).

3. The article sorting device (18) according to claim 2, **characterized in that** it comprises parts (11) with a curved surface following the profiles of the outer cylinders of the rollers (9, 10) enabling the part of the belt (5) not supported by the rollers (9, 10) to be held.

4. The article sorting device (18) according to claim 3, **characterized in that** the parts (11) with a curved surface have a slot (7) inclined with respect to the plane (P) defined by the bearing surface of the articles on the transport unit (2) enabling to receive the supporting plates (6).

5. The article sorting device (18) according to claim 4, **characterized in that** the transport units (2) comprise means (16, 17) for adjusting the inclination of the rollers (9, 10) enabling a symmetrical distance of the ends of the rollers.

6. The article sorting device (18) according to any one of the claims 1 to 5, **characterized in that** the transport belts (5) comprise vertical profiles (26) ensuring that the articles are held on the transport units (2) during their movements on the sorter, in particular during turns leading to a high acceleration speed of the articles.

7. The device according to claim 6, **characterized in that** it comprises control (25) and command equipments capable of detecting the position of the vertical profiles (26) and positioning the belts (5) before the loading station (3) and during loading of the articles (18) in order to place the articles (18) between the vertical profiles (26) when they are on the transport unit (2).

8. The device according to claim 7, **characterized in that** the control and command equipments are capable of detecting a movement of the vertical profiles (26) of a belt (5) when an article (18) is transported and acting on a drive motor of the belt (5) for positioning the vertical profiles in their optimal transport position.

9. The device according to any one of the preceding claims, **characterized in that** the movement of the transport means (21) of the at least one station (3) for the automatic loading of articles (18) can be reversed.

10. The method for sorting articles (18) using the device (1) according to any one of the preceding claims, **characterized in** particular by the following steps:
- detecting, by the system (19, 19'), a possible change of position of an article (18) on the transport means (21) during the acceleration phase of the transport means (21) to transfer the article (18) on one or several transport units (2);
- controlling, by the control system, one or more transport means (21) according to a possible change of position of an article (18) detected in the preceding step.

11. The method according to claim 10, **characterised in that**:
- if the detected change of position of the article (18) is too significant to allow for its automatic taking over by the transport units (2), the loading station (3) evacuates it to a manual processing zone;
- if the detected change of position of the article (18) is small, the loading station (3) varies the speed of the transport means (21) in order to dynamically adjust the position of the article (18) on this transport means (21) for returning to a position compatible with the transfer on the transport units (2);
- if the change is significant, the loading station (3) returns the article (18) upstream of the system (19, 19') to allow for the new position of the article (18) to be determined and restart a loading sequence at reduced speed to one or several transport units (2).

12. The method according to claim 11, wherein the transport means (21) comprises a plurality of transport belts, **characterized in that** the change in the speed of the transport means (21) in the case of a detection of a small change of position of the article (18) comprises the change in the speed of at least one of the transport belts.

13. The method according to any one of the claims 10 to 12, **characterized in that** the belts (5) provided with vertical profiles (26) are pre-positioned before the loading station (3), then displaced during the transfer of the articles (18) on the transport units (2) in order to place the articles (18) between the vertical profiles (26) when they are on the transport unit (2).

14. The method according to claim 13, **characterized in that** it comprises detecting a movement of the vertical profiles (26) of a belt (5), and **in that**, in case such movement is detected when an article is transported, one operates on the motor of the belt (5) to position the vertical profiles (26) in their optimal transport position.

15. A method for sorting articles according to claim 13, **characterized in that** the long articles are placed on at least two adjacent transport units (2) ensuring the positioning of the long articles between the vertical profiles (26) of the, at least two, transport units (2).
